# NEUE EUROPÄISCHE PATENTSCHRIFT

(11) **EP 0 545 894 B2**
(45) Veröffentlichungstag und Bekanntmachung des Hinweises auf die Entscheidung über den Einspruch: **11.12.2002**
(45) Hinweis auf die Patenterteilung: 08.07.1998
(21) Anmeldenummer: 93100749.6
(22) Anmeldetag: 30.03.1990
(51) Int. Cl.: A01C 17/00

(54) **Schleuderdüngerstreuer**
Broadcaster
Epandeur centrifuge

(30) Priorität: 08.04.1989 DE 3911582; 08.04.1989 DE 3911583; 06.10.1989 DE 3933344
(43) Veröffentlichungstag der Anmeldung: 09.06.1993
(62) Teilanmeldung aus: 90106118.4
(73) Patentinhaber: Amazonen-Werke H. Dreyer GmbH & Co. KG, 49205 Hasbergen (DE)
(72) Erfinder: Dreyer, Heinz, Dipl.-Ing.Dr., W-4507 Hasbergen (DE); Scheufler, Bernd, Dr., W-4507 Hasbergen (DE)
(74) Vertreter: Grünecker, Kinkeldey, Stockmair & Schwanhäusser Anwaltssozietät

(56) Entgegenhaltungen:
- EP-A- 0 298 549
- EP-A- 0 392 257
- DE-A- 2 132 041
- FR-A- 596 921
- FR-A- 621 096
- FR-A- 1 532 897
- FR-A- 2 410 427
- FR-A- 2 563 074

## Beschreibung

Die Erfindung betrifft einen Schleuderdüngerstreuer gemäß Oberbegriff des Patentanspruches 1.

Ein derartiger Schleuderdüngerstreuer ist in der EP-A-02 98 549 beschrieben. Dieser Schleuderstreuer weist einen Vorratsbehälter auf, in dessen unteren Bereich mehrere Dosierorgane angeordnet sind, unter denen sich zumindest eine rotierend angetriebene Schleuderscheibe mit Wurfschaufeln befindet. Die von den Dosierorganen die sich im Vorratsbehälter befindlichen Düngemittelpartikel werden in vorbestimmter und in einstellbarer Weise auf zumindest zwei vorbestimmte Stellen, die Aufgabepunkte genannt werden, pro Scheibe aufgegeben, wobei die Lage und Zuordnung der mehrere einer Scheibe zugeordneten Aufgabepunkte zueinander veränderbar und unabhängig voneinander einstellbar sind. Bei einer Verstellung der Aufgabepunkte, wird gleichzeitig die Ausbringmenge verstellt.

Die FR-A-621 096 zeigt einen gezogenen Düngerstreuer. Dieser Düngerstreuer weist einen Vorratsbehälter auf. In dessen unteren Bereich sind Dosierorgane angeordnet, über welche das sich im Vorratsbehälter befindliche Material einer rotierend angetriebenen Schleuderscheibe zugeführt wird. Zwischen den Dosierorganen und der Schleuderscheibe sind zwei Auslaufrutschen angeordnet, die gemeinsam verstellbar sind.

Ein weiterer Schleuderdüngerstreuer ist beispielsweise durch die deutsche Offenlegungsschrift 15 82 091 bekannt. Dieser Schleuderdüngerstreuer weist einen Vorratsbehälter auf, unter dessen unteren Bereich zwei Schleuderscheiben nebeneinander angeordnet sind. Jeder Schleuderscheibe sind zwei in den Boden des Vorratsbehälters angeordnete Dosierorgane zugeordnet, die als Auslauföffnungen ausgebildet sind, durch welche der Dünger den Schleuderscheiben auf vorbestimmten Aufgabepunkten zugeführt wird. Über diese beiden Auslauföffnungen werden jeder Schleuderscheibe die sich im Vorratsbehälter befindlichen Düngemittelpartikel im vorbestimmter und einstellbarer Weise zugeführt, wobei die Düngemittelpartikel jeweils auf zwei Aufgabepunkten jeder Schleuderscheibe aufgegeben werden. Die den Schleuderscheiben zugeordneten Auslauföffnungen werden über miteinander gekoppelte Gestänge, der sog. Streumengeneinstellvorrichtung, gleichzeitig und in gleicher Weise zur Veränderung der auszubringenden Streugutmenge verstellt. Bei diesem bekannten Schleuderdüngerstreuer werden die Schleuderscheiben gegenläufig rotierend angetrieben und weisen ein symmetrisches Streubild auf. Da aber die von den Schleuderscheiben erzeugten Streusektoren in Abhängigkeit von der eingestellten Streumenge oder auch bei einer anderen Streugutart insgesamt wandern können oder sich die Verteilung der in jedem Sektor abgeworfenen Streugutmengen ändern kann, sind Vorkehrungen für die Einstellung der Richtung der Streusektroen der Schleuderscheiben vorgesehen. Mittels dieser Vorkehrungen, die darin bestehen, daß die Streumengeneinstellvorrichtung beweglich und feststellbar an dem Rahmen des Schleuderdüngerstreuers gelagert ist, kann die Lage der Auslauföffnungen gegenüber den Schleuderscheiben über ein Gestänge gleichzeitig und in gleicher Weise zur Veränderung des Streubildes verstellt werden.

Es ist mit Hilfe der Verstellung der Aufgabepunkte der Düngemittelpartikel auf der Schleuderscheibe möglich, das Streubild zu beeinflussen, indem die Lage der Streusektoren verschwenkbar ist. Insbesondere soll dadurch erreicht werden, daß ein möglichst gleichmäßiges Streubild über die gesamte zu bestreuende Fläche erzielt wird.

Versuche haben jedoch nun ergeben, daß diese gemeinsame Verschwenkung der Dosieröffnungen gegenüber den Schleuderscheiben, d.h. eine gleichzeitige Veränderung sämtlicher Aufgabepunkte nicht immer wünschenswert und auch nicht ausreichend ist.

Der Erfindung liegt daher die Aufgabe zugrunde, mit einfachsten Maßnahmen die Möglichkeit zu schaffen, daß Streubild zu korrigieren.

Diese Aufgabe wird erfindungsgemäß durch die Maßnahme gemäß des Kennzeichens des Patentanspruches 1 gelöst. Infolge dieser Maßnahme ist es auf einfachste Weise möglich, durch Verschieben der Aufgabepunkte auf der Schleuderscheibe das Streubild zu korrigieren. Hierbei ist es erstmalig möglich geworden, den einen Aufgabepunkt anders oder mehr als den anderen Aufgabepunkt je Scheibe zu verstellen, so daß sich alle Aufgabepunkte sehr individuell und unabhängig voneinander ein- und verstellen lassen. Hierdurch ist es beispielsweise möglich, wenn zuviel Dünger in den Außen- oder Innenbereich des Streubereiches des Schleuderdüngerstreuers geworfen wird, den für diesen Streubereich zuständigen Aufgabepunkt entsprechend auf der Scheibe zu verlagern. Hierzu ist die Lage und Zuordnung der Dosierorgane zueinander in unabhängiger Weise voneinander verstellbar. Die Aufgabepunkte der den Schleuderscheibe zugeführten Düngemittelpartikeln lassen sich somit auf der Schleuderscheibe verschieben, so daß es hierdurch ebenfalls auch möglich ist, das von den Schleuderscheiben durch die abgeschleuderten Düngemittelpartikel erzeugte Streubild zu korrigieren. Hierbei ist es ebenfalls möglich, den einen Aufgabepunkt anders oder mehr als den anderen Aufgabepunkt je Schleuderscheibe zu verstellen, so daß sich alle Aufgabepunkte sehr individuell und unabhängig voneinander ein- und verstellen lassen.

Zur Einstellung unterschiedlicher Ausbringmengen sowie zur Beeinflussung des von den Schleuderscheiben durch die von den Wurfschaufeln abgeschleuderten Düngemittelpartikel erzeugten Streubilder ist erfindungsgemäß vorgesehen, daß jeder Auslauföffnung ein Schieber zugeordnet ist, daß die jeder Auslauföffnung zugeordneten Schieber unabhängig voneinander verstellbar sind, um so die Aufgabemenge je Aufgabepunkt unabhängig voneinander variieren zu können. Hierbei ist dann erfindungsgemäß vorgesehen, daß die einer Schleuderscheibe zugeordneten Schieber in Abhängigkeit derart voneinander verstellbar sind, daß die Größe der Auslauföffnungen unterschiedlich einzustellen ist, wobei jedoch bei der Verstellung der Schieber die Summe der an sich vorgesehenen Ausbringmenge bzw. die Summe des freigegebenen Querschnittes gleich der Summe des Querschnitte bei gleichgroßer Einstellung der Auslauföffnungen ist. Hierdurch soll erreicht werden, daß bei einer Streubildkorrektur zu der die Öffnungsweiten der Auslauföffnungen unterschiedlich erstellt werden, d.h. den einzelnen Aufgabepunkten unterschiedliche Düngermengen zugeführt werden, sich die Ausbringmenge pro Flächeneinheit nicht verändern. Es erfolgt also eine Verstellung der Auslauföffnungen mittels der Schieber in der Weise, daß beispielsweise eine Reduzierung der Ausbringmenge der einen Auslauföffnung zu einer Erhöhung der Ausbringmenge um die Menge der Reduzierung der anderen Auslauföffnung erfolgt, so daß die gesamte Ausbringmenge pro Flächeneinheit unverändert bleibt.

Damit nun eine besonders einfache Möglichkeit zum Ein- und Verstellen der Querschnitte der Auslauföffnungen bzw. ein Verstellen der Lage der Aufgabeflächen auf der jeweiligen Schleuderscheibe herbeigeführt werden kann, ist erfindungsgemäß vorgesehen, daß die Verstellung der Auslauföffnungen bzw. die Verstellung der Lage der Aufgabeflächen über eine Fernbedienung erfolgt.

Das Ein- und Verstellen der Auslauföffnungen bzw. der Lage der Aufgabeflächen der den Schleuderscheiben zugeführten Düngemittelpartikel läßt sich mittels der Fernbedienung erfindungsgemäß derart ausführen, daß die Fernbedienung mit einem Computer verbunden ist, welcher die Einstellung sowie das Streuergebnis erfaßt und entsprechend die Einstellung des Schleuderdüngerstreuers regelt. Hierdurch läßt sich die Ein- und Verstellung Größe der der Auslauföffnungen bzw. die Lage der Aufgabeflächen des Düngemittelstromes auf die Schleuderscheiben auf einfachste Weise durchführen, wobei es während des Ausbringvorganges möglich ist, daß eine automatische, selbständige Ein- und Verstellung der Auslauföffnungsquerschnitte sowie der Lage der Aufgabeflächen zur Streubildkorrektur unter Berücksichtigung der jeweiligen Nährstoffversorgung der zu bestreuenden Fläche erfolgt.

Des Versteller von zwei oder mehreren einer Schleuderscheibe zugeordneten Auslauföffnungen in unabhängiger Weise voneinander,wobei die Aufgabeflächen des Düngers variierbar sind, läßt sich sowohl bei um aufrechte, in bevorzugter Weise senkrechte Achsen rotierende Schleuderscheiben als auch bei um zur Fahrtrichtung nach vorne und um nach innen geneigte Achsen rotierende Schleuderscheiben durchführen.

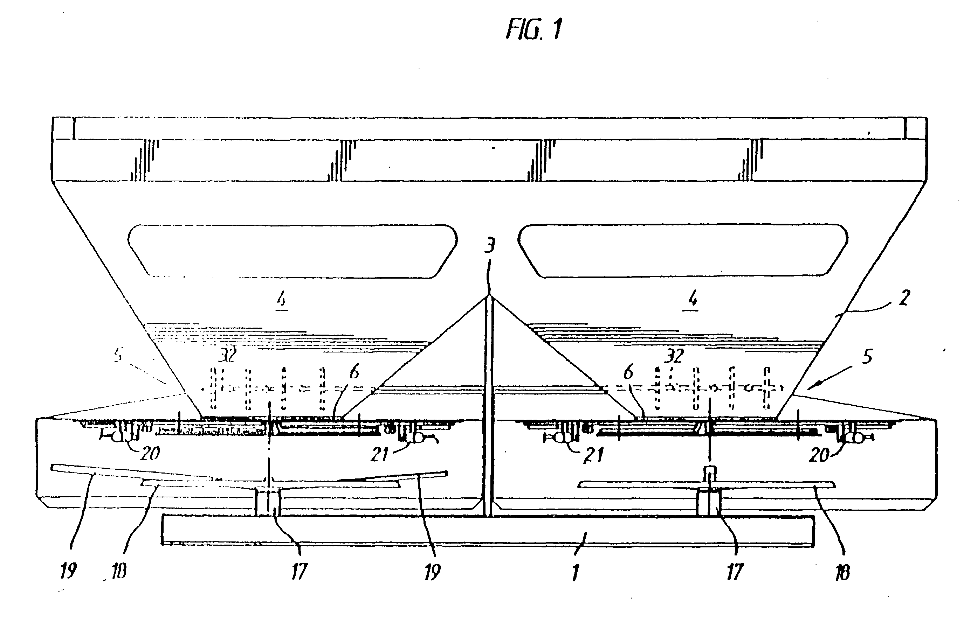

Weitere Einzelheiten der Erfindung sind der Beispielsbeschreibung und den Zeichnungen zu entnehmen. Hierbei zeigen
- Fig. 1: der in erfindungsgemäßer Weise ausgerüstete Schleuderdüngerstreuer in der Ansicht von hinten,

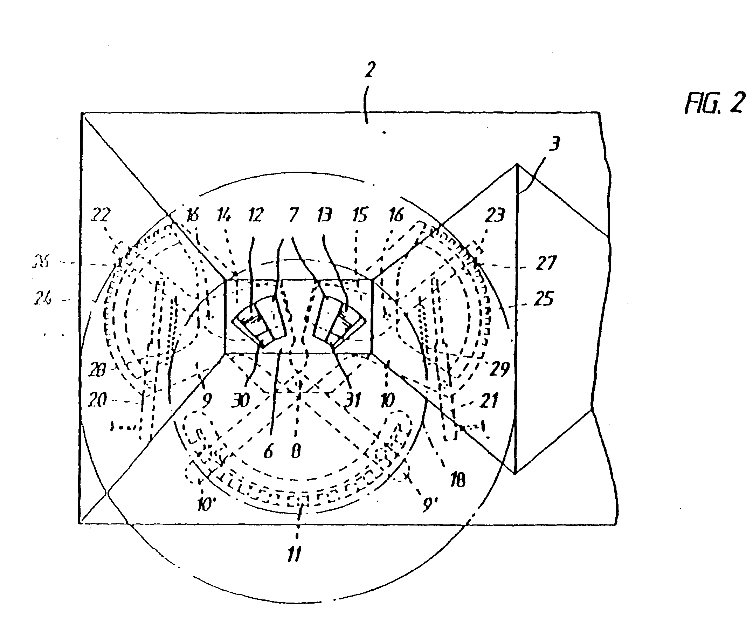

- Fig. 2: Teildraufsicht des in erfindungsgemäßer Weise ausgerüsteten Schleuderdüngerstreuers gemäß Fig. 1,
- Fig. 3: ein hinter einem Ackerschlepper angeordneter Schleuderdüngerstreuer, der zur Vergrößerung des Fassungsvermögens seines Vorratsbehälters einen Behälteraufsatz aufweist, in der Seitenansicht,

Der Antrieb der Schleuderscheiben 18 erfolgt in bekannter und daher nicht näher dargestellter Weise, beispielsweise mittels einer Gelenkwelle von der Zapfwelle des den Schleuderdüngerstreuer transportierenden Ackerschleppers und über Getriebeanordnungen. Auch können die Schleuderscheiben 18 von Ölmotoren angetrieben werden.

Die die Schieber 14 und 15 betätigenden Betätigungselemente 20 und 21 sind zwischen den Schiebern 14 und 15 und den die Auslauföffnungen 12 und 13 aufweisenden plattenförmigen Elementen 9 und 10 angeordnet. Hierbei wirken die den Schiebern 14 und 15 zugehörigen Einstellhebel 22 und 23 mit der an dem jeweiligen plattenförmigen Element 9 bzw. 10 angeordneten Einstellskala 24 bzw. 25 zusammen. Auf diesen Skalen 24 und 25 sind die in unterschiedlichen Positionen einstellbaren Anschläge 26 und 27 befestigt, an denen die Einstellhebel 22 und 23 der Schieber 14 und 15 zur Anlage kommen. Zwischen den plattenförmigen Elementen 9 und 10 und den Schiebern 14 und 15 ist weiterhin jeweils die Zugfeder 28 bzw. 29 angeordnet. Mittels dieser Zugfeder 28 bzw. 29 werden die Dosierschieber 14 bzw. 15 bis gegen die Anschläge 26 bzw. 27 gezogen, wenn die als Hydraulikzylinder ausgebildeten Betätigungselemente 20 und 21 drucklos geschaltet sind. Werden nun diese als Hydraulikzylinder ausgebildeten Betätigungselemente 20 bzw. 21 mit Hydrauliköl beaufschlagt, wird die Düngemittelzufuhr zu den Schleuderscheiben 18 unterbrochen, indem die Schieber 14 bzw. 15 die Auslauföffnungen 12 und 13 verschließen.

Die Lage der in den plattenförmigen Elementen 9 und 10 angeordneten Auslauföffnungen 12 und 13 läßt sich im Verstellbereich der beiden größeren, in der Bodenplatte 6 sich befindlichen Zulauföffnungen 7 verstellen, so daß die Lage und Zuordnung der beiden, einer Schleuderscheibe 18 zugeordneten Düngeraufgabepunkte zueinander veränderbar und unabhängig voneinander einstellbar ist. Die jeweilige Lage der Auslauföffnungen 12 bzw. 13 gegenüber den Schleuderscheiben 18 läßt sich mittels den mit der Einstellskala 11 zusammenwirkenden Positionshebein 9' bzw. 10' der plattenförmigen Elemente 9 bzw. 10 in exakter Weise vornehmen, so daß sich die Lage des jeweiligen Aufgabepunktes der Düngemittelpartikel auf der Schleuderscheibe 18 individuell einstellen läßt. Hierbei befindet sich der jeweilige Aufgabepunkt in etwa senkrecht unterhalb des jeweils freigegebenen Öffnungsquerschnittes 30 bzw. 31 der Auslauföffnungen 12 bzw. 13. Durch Verschwenken der mit den Auslauföffnungen 12 bzw. 13 versehenen plattenförmigen Elemente 9 bzw. 10 jeweils um die aufrechte Achse 8, läßt sich die Lage der jeweiligen Auslauföffnung 12 bzw. 13 auf einfachste Weise unabhängig voneinander verstellen. Durch diese Verstellmöglichkeit der Lage der jeweiligen Auslauföffnung 11 bzw. 13 gegenüber den Schleuderscheiben 18 ist es auf einfachste Weise möglich, das Streubild der von den Schleuderscheiben 18 abgeschleuderten Düngemittelpartikel z.B. nur in seinem Innenbereich zu regulieren, ohne den äußeren Bereich zu verändern. Hierdurch entsteht eine wesentlich höhere Einstellgenauigkeit. Die Dosiermengen der beiden Auslauföffnungen 12 bzw. 13 sind unabhängig voneinander einstellbar bzw. ihre Öffnungsquerschnitte sind unabhängig voneinander zu verschließen bzw. zu öffnen. Bei einem Schleuderdüngerstreuer mit zwei Schleuderscheiben 18 lassen sich somit nur durch das Öffnen bzw. Verschließen der Auslauföffnungen 12 bzw. 13 mittels der Schieber 14 bzw. 15 vier Dosiermengen einstellen. Hierdurch ist es möglich, z.B. durch Abschalten einer der vier Öffnungen, beispielsweise der für den linken Außenbereich zuständigen Auslauföffnung die Arbeitsbreite links um etwa ein Viertel der Arbeitsbreite des Schleuderdüngerstreuers zu reduzieren. Bislang war es nur möglich, die Gesamtarbeitsbreite durch halbseitiges Streuen um die Hälfte zu reduzieren.

Durch die Möglichkeit der Ver- und Einstellung der Lage und Zuordnung der beiden, der Schleuderscheibe 18 zugeordneten Aufgabepunkte zueinander ist es auf einfachste Weise möglich, durch das Verschieben der Aufgabepunkte auf der Schleuderscheibe 18 das Streubild zu korrigieren. Die unabhängige Verstellung der Lage der beiden Auslauföffnungen 12 bzw. 13 gegeneinander und gegenüber der Schleuderscheibe 18 ermöglicht so beispielsweise, wenn zu viel Dünger in den Außen- oder Innenbereich der von den beiden Schleuderscheiben 18 erzeugten Streusektoren geworfen wird, die Lage des Aufgabepunktes, mit dem der Dünger auf der Schleuderscheibe 18 auftrifft, entsprechend durch die Verlagerung der Lage der jeweiligen Auslauföffnung 12 bzw. 13 auf der Schleuderscheibe 18 zu verlagern. Diese entsprechende Verlagerung das Düngemittelaufgabepunktes auf den Schleuderscheiben 18 bewirkt, daß die von den Wurfschaufeln 19 der Schleuderscheiben 18 abgeschleuderten Düngemittelpartikel wieder gleichmäßig über die zu bestreuende Fläche verteilt werden, so daß ein korrektes, gleichmäßiges Streubild entsteht. Es ergeben sich also eine Reihe vor Variationsmöglichkeiten, um das Streubild zu korrigieren und zu optimieren, so daß eine gleichmäßige Düngerverteilung in der gewünschten Weise über die gewünschte Arbeitsbreite des Schleuderdüngerstreuers möglich wird. Beispielsweise läßt sich so sehr einfach durch die Reduzierung oder die Erhöhung der von dem Dosierorganen 12 bzw. 13 ausgebrachten Düngermenge eine Streubildkorrektur durchführen. Es wird beispielsweise dem Aufgabepunkt, der für die Düngeranhäufung oder Düngerminderstelle verantwortlich ist, mehr oder weniger Dünger zugeführt, indem die Öffnungsweite der jeweiligen Auslauföffnung 12 bzw. 13 mittels der Schieber 14 bzw. 15 in entsprechender Weise geändert wird. Eine weitere Korrektur und Verlagerung von Düngeranhäufung bzw. Düngermangel ist durch eine entsprechende Lageänderung der Dosierorgane 12 bzw. 13 gegenüber den Schleuderscheiben 18 auf einfachste Weise möglich.

Zum Ausbringen von kleinen und kleinesten Düngerausbringmengen pro Flächeneinheit ist zur Vermeidung von Verstopfungen vorgesehen, daß nur eine Auslauföffnung 12 oder 13 pro Schleuderscheibe 18 geöffnet wird, so daß über eine größere Einstellung der anderen, noch zur Dosierung benutzten Auslauföffnung 12 oder 13 dann der Dünger der Schleuderscheibe 18 zugeführt wird. Hier ist es dann evt1 notwendig, eine Streubildkorrektur zum Erzeugen eines symmetrischen Streubildes vorzunehmen, indem die Lage der noch zur Dosierung benutzten Auslauföffnung 12 oder 13 gegenüber der Schleuderscheibe 18, d.h. der Düngeraufgabepunkt auf die jeweilige Schleuderscheibe 18 verändert wird, so daß ein gleichmäßiges Streubild über die gesamte Streubreite erhalten wird.

Des weiteren kann erfindungsgemäß vorgesehen sein, daß dem Schleuderdüngerstreuer Sensoren zur Erfassung der einzelnen, von den Schleuderscheiben 18 erzeugten Streusektoren vorgesehen sind, deren aufgenommenen Meßwerte beispielsweise an eine elektronische Regeleinrichtung weitergeleitet werden. Diese elektronische Regeleinrichtung kann wiederum mit den Betätigungselementen 20 und 21 für die Schieber 14 und 15 gekoppelt sein. Weiterhin ist es denkbar, Betätigungsvorrichtungen zur Verstellung der Lage der Auslauföffnungen 12 und 13 gegenüber den Schleuderscheiben 18 zwischen dem Rahmen 1 des Schleuderdüngerstreuers und dem plattenförmigen Elementen 9 bzw. 10 vorzusehen, wobei die Betätigungsvorrichtungen zur Veränderung der Lage der Auslauföffnungen 12 und 13 gegenüber den Schleuderscheiben 18, also zur Verstellung der Düngeraufgabepunkte des aus dem Vorratsbehälter 2 durch die Auslauföffnungen 12 und 13 herausrieselnden Düngers, ebenfalls mit der elektronischen Regeleinrichtung, die beispielsweise auf dem Ackerschlepper angeordnet ist, verbunden. Durch die Koppelung der Betätigungselemente 20 und 21 für die Schieber 14 und 15 und der Betätigungsvorrichtung zur Verstellung der Lage der Auslauföffnungen 12 und 13 gegenüber den Schleuderscheiben 18 mit der elektronischen Regeleinrichtung ist es auf einfachste Weise möglich, eine automatische Veränderung der Öffnungsweite und der Lage der einer Schleuderscheibe 18 zugeordneten Auslauföffnungen zueinander zu verändern, entsprechend der von den Sensoren ermittelten Werte, so daß eine automatische Streubildkorrektur erfolgt. Somit werden während des Düngerstreuens automatisch Korrektruen möglich. Auch ist eine individuelle Verstellung per Hand vom Schleppersitz aus möglich.

Damit die sich in Vorratsbehälter 2 befindlichen Düngemittelpartikel ordnungsgemäß zu den jeweiligen Auslauföffnungen 12 bzw. 13 gelangen, ragt in jedes trichterförmige Behälterteil 4 das angetriebene Rührorgan 32 hinein.

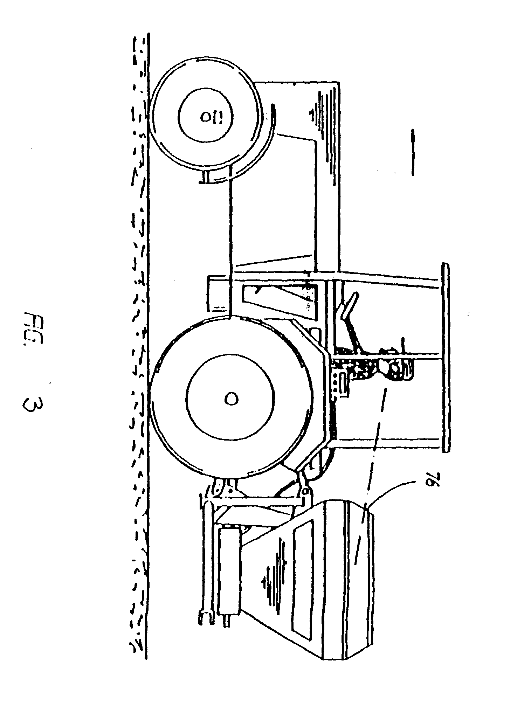

Zur Vergrößerung des Fassungsvermögens des Vorratsbehälters ist auf diesen Vorratsbehälter noch der Behälteraufsatz aufgesetzt. Damit nun noch eine Kontrolle der exakten Funktionsweise der Dosierorgane des Schleuderdüngerstreuers durch den Schlepperfahrer erfolgen kann, ist bei mit diesem Behälteraufsatz versehenen Vorratsbehälter vorgesehen, daß die Frontseite 76 des Behälteraufsatzes durchsichtig gestaltet wird, damit dem die Schlepperfahrer gemäß Fig.3 die Einsicht in das Innere des Vorratsbehälters auf einfachste Weise möglich ist.

## Patentansprüche

1. Schleuderdüngerstreuer mit Vorratsbehälter, in dessen unteren Bereich mehrere Dosierorgane angeordnet sind, unter denen sich zwei rotierend angetriebene Schleuderscheiben mit Wurfschaufeln befinden, denen von den Dosierorganenen die sich im Vorratsbehälter befindlichen Düngemittelpartikel in vorbestimmter und einstellbarer Weise auf zumindest zwei vorbestimmte Stellen, die Aufgabepunkte genannt werden, pro Scheibe aufgegeben werden, wobei die Lage und Zuordnung der mehreren, einer Scheibe (18) zugeordneten Aufgabepunkte zueinander veränderbar und unabhängig voneinander einstellbar ist, **dadurch gekennzeichnet, daß** Vorrichtungen vorhanden sind, die ermöglichen, daß bei gleichbleibender Summe der freigegebenen Querschnitte, d.h. Öffnungsweite, der Auslauföffnungen die Lage und Zuordnung der Aufgabpunkte verstellbar sind, wobei die Auslauföffnungen (12,13) in dem Boden des Vorratsbehälters (2) gegenüber der Drehachse der Schleuderscheibe (18) bzw. den Schleuderscheiben verstellbar sowie die Auslauföffnungen (12,13) zueinander verstellbar und in unterschiedlichen Positionen zueinander einstellbar sind.

2. Schleuderdüngerstreuer nach Anspruch 1, **dadurch gekennzeichnet, daß** jeder Auslauföffnung (12,13) ein Schieber (14,15) zugeordnet ist, daß die jeder Auslauföffnung (12,13) zugeordneten Schieber (14,15) unabhängig voneinander verstellbar sind, um so die Aufgabemenge je Aufgabepunkt unabhängig voneinander variieren zu können.

3. Schleuderdüngerstreuer nach einem oder mehreren der vorstehenden Ansprüche, insbesondere Anspruch 2, **dadurch gekennzeichnet, daß** die einer Scheibe (18) zugeordneten Schieber (14,15) in Abhängigkeit derart voneinander verstellbar sind, daß die Größe der Auslauföffnungen (12,13) unterschiedlich einzustellen ist, wobei jedoch bei der Verstellung der Schieber (14,15) die Summe der an sich vorgesehenen Ausbringmenge bzw. die Summe des freigegebenen Querschnittes gleich der Summe der Querschnitte bei gleichgroßer Einstellung der Auslauförfnungen (12,13) ist.

4. Schleuderdüngerstreuer nach Anspruch 1, **dadurch gekennzeichnet, daß** die Fernbedienung mit einem Computer verbunden ist, welcher die Einstellung sowie das Streuergebnis erfaßt und entsprechend die Einstellung des Schleuderstreuers regelt.

## Claims

1. Centrifugal fertilizer broadcaster with a hopper, in the lower region of which there are disposed a plurality of metering members, two rotatably driven centrifugal discs being situated beneath said members and being provided with throwing vanes, the fertilizer particles, situated in the hopper, being delivered by the metering members to said discs in a predetermined and adjustable manner at at least two predetermined locations, which are called delivery points, per disc, the position of and association between the plurality of delivery points associated with a disc (18) being changeable relative to one another and being adjustable independently of one another, **characterised in that** arrangements are provided which permit the position of and association between the delivery points to be displaceable while the sum of the exposed cross-sections, i.e. the width of opening, of the outlet apertures remains constant, the outlet apertures (12, 13) in the base of the hopper (2) being displaceable relative to the rotary axis of the centrifugal disc (18), or respectively relative to the centrifugal discs, and the outlet apertures (12, 13) being displaceable relative to one another and being adjustable in various positions relative to one another.

2. Centrifugal fertilizer broadcaster according to claim 1, **characterised in that** a slide (14, 15) is associated with each outlet aperture (12, 13), and **in that** the slides (14, 15) associated with each outlet aperture (12, 13) are displaceable independently of each other so as to permit the delivery quantity per delivery point to be varied independently of one another.

3. Centrifugal fertilizer broadcaster according to one or more of the preceding claims, more especially claim 2, **characterised in that** the slides (14, 15), which are associated with a disc (18), are displaceable in dependence on one another in such a manner that the size of the outlet apertures (12, 13) is to be variably set, though, with the displacement of the slides (14, 15), the sum of the output quantity intended per se, or respectively the sum of the exposed cross-section, is equal to the sum of the cross-sections when the outlet apertures (12, 13) are identically set.

4. Centrifugal fertilizer broadcaster according to claim 1, **characterised in that** the remote control is connected to a computer which monitors the adjustment and the broadcasting result and accordingly regulates the setting of the centrifugal broadcaster.

## Revendications

1. Epandeur centrifuge d'engrais comprenant un réservoir dont la zone inférieure est équipée de plusieurs organes de dosage sous lesquels il y a deux disques d'épandage entraînés en rotation et équipés de palettes d'éjection, ces disques recevant des organes de dosage, les particules d'engrais contenues dans le réservoir, d'une manière prédéterminée et réglable en au moins deux points prédéterminés appelés points d'arrivée sur chaque disque,
- la position et l'association des différents points d'arrivée associés à un disque (18) pouvant être modifiées l'une de l'autre et indépendamment l'une de l'autre,
**caractérisé par**
des dispositifs permettant pour une somme des sections, c'est-à-dire le degré d'ouverture constant des orifices de sortie, de régler la position et l'association des points d'arrivée de l'engrais,
les orifices de sortie (12, 13) dans le fond du réservoir (2) étant réglables par rapport à l'axe de rotation des disques d'épandage (18) ou du disque d'épandage et les orifices de sortie (12, 13) étant réglables les uns par rapport aux autres et pouvant se régler dans des positions différentes.

2. Epandeur centrifuge d'engrais selon la revendication 1,
**caractérisé par**
- un tiroir (14, 15) associé à chacun des orifices de sortie (12, 13),
- les tiroirs (14, 15) associés à chaque orifice de sortie (12, 13) se réglant indépendamment les uns des autres pour permettre de modifier indépendamment la quantité fournie à chaque point d'arrivée.

3. Epandeur centrifuge d'engrais selon l'une quelconque des revendications précédentes, notamment la revendication 2,
**caractérisé en ce que**
les tiroirs (14, 15) associés à un disque (18) sont réglables l'un en fonction de l'autre pour permettre de régler différemment la grandeur des orifices de sortie (12, 13) mais toutefois lors du réglage du tiroir (14, 15), la somme des quantités distribuées, prévues ou la somme des sections libérées est égale à la somme des sections pour un réglage de même grandeur des orifices de sortie (12, 13).

4. Epandeur centrifuge d'engrais selon la revendication 1,
**caractérisé en ce que**
la télécommande est reliée à un ordinateur qui saisit le réglage et le résultat de l'épandage et assure la commande correspondante du réglage du disque d'épandage.
